# EUROPEAN PATENT APPLICATION

(11) **EP 1 054 025 A1**
(43) Date of publication of application: **22.11.2000**
(21) Application number: 00304206.6
(22) Date of filing: 18.05.2000
(51) Int. Cl.: C08F 10/00, C08F 2/38, C08F 4/642

(54) **Method for controlling molecular weight and molecular weight distribution in polymers produced using a single site catalyst**

(30) Priority: 19.05.1999 US 315194
(71) Applicant: UNION CARBIDE CHEMICALS & PLASTICS TECHNOLOGY CORPORATION, Danbury, Connecticut 06817-0001 (US)
(72) Inventor: Bai, Xinlai, Piscataway, New Jersey 08854 (US); Muruganandam, Natarajan, Belle Mead, New Jersey 08502 (US)
(74) Representative: Hayes, Adrian Chetwynd

(57) **Abstract**

In a polymerization process employing a single site catalyst, there is provided an improvement comprising controlling the molecular weight, molecular weight distribution, or both by introducing a physical property modifier selected from the group consisting of an aliphatic hydrocarbon, including an alicyclic hydrocarbon, an aromatic hydrocarbon, and mixtures thereof.

## Description

### Field of the Invention

The present invention relates to a method for controlling the molecular weight, molecular distribution, or both of a polymer produced using a single site (e.g., metallocene) catalyst. More particularly, in a polymerization process employing a single site catalyst, these properties of the polymer (e.g., polymers of alpha olefins and/or diolefins) are controlled by the use of a physical property modifier selected from the group consisting of an aliphatic hydrocarbon, an aromatic hydrocarbon, and mixtures thereof.

### Background of the Invention

Molecular weight (MW) and molecular weight distribution (MWD) affect properties of the final polymer produced in a polymerization process. More importantly, MW and MWD play a role in the end-use or fabrication process into which the final polymer is incorporated. That is, polymers can often lack the desirable Mooney viscosity characteristics desired by end-use customers or formulators because the polymer does not possess the necessary MW and MWD values. Accordingly, there is a need for a process to control/manipulate MW and MWD during the polymerization of the polymer itself in order to achieve a specifically desired polymer product. This need is especially necessary when a single-site catalyst such as a metallocene is used to polymerize a polymer.

### Summary of the Invention

In a polymerization process employing a single site catalyst, the improvement comprising controlling the molecular weight, molecular weight distribution, or both of a produced polymer by introducing a physical property modifier selected from the group consisting of an aliphatic hydrocarbon, an alicyclic hydrocarbon, an aromatic hydrocarbon, and mixtures thereof into the polymerization.

### Detailed Description of the Invention

Physical Property Modifiers.Compounds useful in controlling or modifying the molecular weight (Mw), molecular weight distribution (MWD or Mw/Mn), or both properties in a polymer are referred to as physical property modifiers. The physical property modifiers employed in the present invention are of two different types: (1) aliphatic hydrocarbon compounds including cyclic hydrocarbons (i.e., alicyclic hydrocarbons) and (2) aromatic hydrocarbon compounds. For the present invention, it is preferred that both types be in the form of a liquid. Either of the two different types may be employed alone or a mixture of them can be employed to obtain the desired molecular weight and/or molecular weight distribution for a polymer.

Aliphatic hydrocarbon compounds have about 4 to 12 carbon atoms. Preferably, aliphatic hydrocarbon compounds, excluding alicyclic hydrocarbon compounds, that serve as physical property modifiers in the process of the present invention have a solubility parameter of not more than 7.5 (cal/cm³)^{1/2}. Alicyclic hydrocarbons have a solubility parameter of not less than 7.7 (cal/cm³)^{1/2}. These saturated compounds can be, for example, selected from the group consisting of butane, pentane, isopentane, hexane, heptane, decane, cyclopentane, cyclohexane, methylcyclohexane, and mixtures thereof. Most preferably, the liquid aliphatic hydrocarbons employed in the invention are isopentane, hexane, heptane, and mixtures thereof. In the present invention, when the sole physical property modifier is an aliphatic hydrocarbon compound, the polymer produced has a high Mooney (i.e., high molecular weight) ranging from about 50 to 150 and a narrow molecular weight distribution (Mw/Mn or PDI (polydispersity index)) ranging from about 1.5 to 4.5.

Aromatic hydrocarbon compounds have about 6 to 20 carbon atoms. Preferably, aromatic hydrocarbon compounds that serve as physical property modifiers in the process of the present invention have a solubility parameter of not less than 7.7 (cal/cm³)^{1/2} These compounds can be, for example, selected from the group consisting of benzene, azobenzene, toluene, xylene (ortho, meta, and para isomers), and mixtures thereof. Most preferably, the liquid aromatic hydrocarbon compounds employed in the invention are toluene, azobenzene, xylene (ortho, meta, and para), and mixtures thereof. When the sole physical property modifier is an aromatic hydrocarbon compound, the polymer produced has a low Mooney ranging in value from about 10 to 100 and a narrow MWD ranging from about 1.5 to 4.5.

Each of the two types of physical property modifiers (aliphatic and aromatic) can be employed alone. When a combination of the two types of physical property modifiers (an aliphatic and an aromatic) are employed in the invention, an intermediate MW and a broad MWD is obtained. The mixing ratio of a combination of type (1) or aliphatic physical property modifier to type (2) or aromatic physical property modifier is by volume and differs to some extent depending upon the compound selected from each of type (1) and type (2). In general, however, said mixing ratio is 99/1 to 1/99, preferably 90/10 to 10/90, most preferably 85/15 to 60/40. Preferred combinations of these two types, (1) aliphatic and (2) aromatic hydrocarbon compounds, are: hexane-toluene, isopentane-toluene, heptane-toluene, hexane-xylene, isopentane-xylene, and heptane-xylene. Most preferred combinations are: hexane-toluene and isopentane-toluene. By manipulating the mixing ratio of a combination of the two types of physical property modifiers it is possible to produce a polymer having a full range of MW and MWD properties.

The physical property modifiers can be employed in a variety of ways depending upon the type of polymerization (solution/slurry or gas) and the type of catalyst employed (liquid or supported).

In slurry/solution processes employing a liquid or soluble catalyst, one or more of these physical property modifiers can be utilized with a catalyst (solid or liquid) that is soluble with one or both of them. When only one physical property modifier is employed alone, the catalyst precursor can be dispersed/dissolved in that modifier and fed to the reaction. When two or more physical properties modifiers are to be employed, one way to accomplish this is to simply disperse or dissolve the catalyst precursor in one of the physical property modifiers with the other remaining physical property modifier(s) being added separately and/or subsequently thereto. Alternatively, a second way to practice is to disperse or dissolve the catalyst compound in a mixture of two or more physical property modifiers in any desired ratio of the modifiers. This dispersion/solution of catalyst is then fed to a slurry/solution polymerization process utilizing the same or a different compound from the physical property modifier as the dispersant/solvent (reaction medium), while monomer is preferably introduced into the polymerization reactor.

In gas phase processes utilizing a liquid or soluble catalyst, as set forth above in the slurry/solution polymerization, the catalyst precursor can be dispersed or dissolved in a sole physical property modifier which in turn is fed to the polymerization. Or, when two or more physical property modifiers are employed, the catalyst compound can be dispersed or dissolved in one physical property modifier with the other remaining physical property modifier(s) being added subsequently thereto. Alternatively, when at least two physical property modifiers are employed, the catalyst precursor compound can be dispersed/dissolved in a mixture of the two physical property modifier in a desired ratio, and the mixture/solution is then fed to the gas fluidized polymerization reaction. Typically, the catalyst dispersion/solution is fed (continuously or intermittently) into the gas phase polymerization reactor either separately or mixed with a cocatalyst, while monomer is separately introduced either continuously or intermittently.

Generally, supported catalysts are employed in gas phase polymerizations with soluble/solution catalysts being utilized in solution/slurry polymerizations. In the present invention, a supported catalyst can be employed in gas and solution/slurry processes in conjunction with one or more physical property modifiers. This is accomplished in the following manner. The catalyst precursor compound is dissolved in a sole physical property modifier or in either one or both (in a desired ratio) when a plurality of physical property modifiers is utilized. Then a particulate support material (silica, carbon black, alumina, magnesia) is added to the mixture. Preferably, the support material is silica, carbon black, or a mixture of the two. The slurry so produced is dried to remove excessive liquid (physical property modifiers) by purging or evacuation under an inert atmosphere to form a free-flowing powdered catalyst. The supported catalyst so produced is fed continuously or intermittently to the polymerization reactor in the manner any other supported catalyst is fed. In one variation on this embodiment, additional modifier can be fed separately and/or along with the supported catalyst that has been treated with physical property modifier(s).

Polymers. Olefin polymers that may be produced according to the invention include, but are not limited to, ethylene homopolymers, homopolymers of linear or branched higher alpha-olefins containing 3 to about 20 carbon atoms, and interpolymers of ethylene and such higher alpha-olefins, with densities ranging from about 0.84 to about 0.96. Homopolymers and copolymers of propylene can also be produced by the inventive catalyst and process. Suitable higher alpha-olefins include, for example, propylene, 1-butene, 1-pentene, 1-hexene, 4-methyl-1-pentene, 1-octene, and 3,5,5-trimethyl-1-hexene. Additionally, the olefin polymers according to the invention can also be based on or contain conjugated or non-conjugated dienes, such as linear, branched, or cyclic hydrocarbon dienes having from about 4 to about 20, preferably 4 to 12, carbon atoms. Preferred dienes include 1,4-pentadiene, 1,5-hexadiene, 5-vinyl-2-norbornene, 1,7-octadiene, 7-methyl-1,6-octadiene (MOD), vinyl cyclohexene, dicyclopentadiene, butadiene, isobutylene, isoprene, ethylidene norbornene (ENB) and the like. Aromatic compounds having vinyl unsaturation such as styrene and substituted styrenes, and polar vinyl monomers such as acrylonitrile, maleic acid esters, vinyl acetate, acrylate esters, methacrylate esters, vinyl trialkyl silanes and the like may be polymerized according to the invention as well. Specific olefin polymers that may be made according to the invention include, for example, polyethylene, polypropylene, ethylene/propylene rubbers (EPR's), ethylene/propylene/diene terpolymers (EPDM's), ethylene-butene copolymer, ethylene-butene-diene polymer, polybutadiene, polyisoprene, and the like. In the present invention EPR's and EPDM's typically have densities ranging from 0.84 to 0.89.

Polymerization Process and Conditions. The above-described polymers are produced by polymerizing of one or more of the monomers (e.g., olefins, diolefins, and/or vinyl aromatic compounds) in a suspension, slurry, or gas phase process using known equipment and reaction conditions, and it is not limited to any specific type of reaction. However, the preferred polymerization process is a gas phase process employing a fluidized bed. Gas phase processes employable in the present invention are well known and can include so-called "conventional" gas phase processes and "condensed-mode" processes, and most recent, "liquid mode" processes.

In many processes, it is desirable to include a scavenger in the reactor to remove adventitious poisons such as water or oxygen before they can lower catalyst activity. It is recommended that trialkylaluminum species be used for Ziegler catalysts and that methylalumoxane be employed for such purposes for processes employing metallocene catalysts.

Conventional fluidized processes are disclosed, for example, in U.S. Patent Nos. 3,922,322; 4,035,560; 4,994,534, and 5,317,036.

Condensed mode polymerizations, including induced condensed mode, are taught, for example, in U.S. Patent Nos. 4,543,399; 4,588,790; 4,994,534; 5,317,036; 5,352,749; and 5,462,999. For polymerizations producing alpha olefin homopolymers and copolymers condensing mode operation is preferred.

Liquid mode or liquid monomer gas phase polymerization is described in U.S. Patent No. 5,453,471; U.S. Ser. No. 510,375; and WO 96/04322 (PCT/US95/09826) and WO 96/04323 (PCT/US95/09827). When one or more dienes are employed it is preferred to employ liquid mode.

For polymerizations such as ethylene-propylene copolymer (e.g., EPMs), ethylene-propylene-diene terpolymer (e.g., EPDMs), and diolefin (e.g., butadiene), and vinyl aromatics polymerizations, it is preferable to employ an inert particulate material, a so-called fluidization aid. Inert particulate materials are described, for example, in U.S. Patent No. 4,994,534 and include carbon black, silica, clay, talc, and mixtures thereof. Of these, carbon black, silica, and mixtures of them are preferred. When employed as fluidization aids, these inert particulate materials are used in amounts ranging from about 0.3 to about 80% by weight, preferably about 5 to 50% based on the weight of the polymer produced. The inert particulate material can also include a modified carbon black as disclosed in WO 98/34960 and/or an activated carbon as disclosed in EP 0 727,447. The use of inert particulate materials as fluidization aids in polymerization can produce a polymer having a core-shell configuration such as that disclosed in U.S. Patent No. 5,304,588. In the case of sticky polymers, these resin particles are produced by a fluidized bed polymerization process at or above the softening point of the sticky polymer.

The polymerizations can be carried out in a single reactor or multiple reactors, typically two or more in series, can also be employed. When gas phase reactors are employed, gas fluidization can be assisted by the use of mechanical stirrers or paddles. The essential parts of the reactor are the vessel, the bed, the gas distribution plate, inlet and outlet piping, at least one compressor, at least one cycle gas cooler, and a product discharge system. In the vessel, above the bed, there is a velocity reduction zone, and in the bed a reaction zone.

Generally, all of the above modes of polymerizing are carried out in a gas phase fluidized bed containing a "seed bed" of polymer which is the same or different from the polymer being produced. Preferably, the bed is made up of the same granular resin that is to be produced in the reactor.

The bed is fluidized using a fluidizing gas comprising the monomer or monomers being polymerized, initial feed, make-up feed, cycle (recycle) gas, inert carrier gas (e.g., nitrogen, argon, or inert hydrocarbon, such as ethane, propane, butane, pentane, isopentane, etc.) and, if desired, modifiers (e.g., hydrogen). Thus, during the course of a polymerization, the bed comprises formed polymer particles, growing polymer particles, catalyst particles, and optional flow aids (fluidization aids) fluidized by polymerizing and modifying gaseous components introduced at a flow rate or velocity sufficient to cause the particles to separate and act as a fluid.

In general, the polymerization conditions in the gas phase reactor are such that the temperature can range from sub-atomospheric to super-atmospheric, but is typically from about 0 to 120°C, preferably about 40 to 100°C, and most preferably about 40 to 80°C. Partial pressure will vary depending upon the particular monomer or monomers employed and the temperature of the polymerization, and it can range from about 1 to 300 psi (6.89 to 2,067 kiloPascals), preferably 1 to 100 psi (6.89 to 689 kiloPascals). Condensation temperatures of the monomers such as butadiene, isoprene, styrene are well known. In general, in gas fluidized polymerizations in which a diene is the only monomer or a diene comprises a major percentage of the monomers being polymerized, it is preferred to operate at slightly above to slightly below (that is, for example, ± 10°C) the dew point temperature of the monomer or at least one of the monomers.

Single Site Catalysts. The single site catalyst employable in the present invention may be a metallocene, i.e., an organometallic coordination complex of one or more n-bonded moieties (i.e., cycloalkadienyl groups) in association with a metal atom from Groups IIIB to VIII or the Lanthanide series of the Periodic Table of Elements. Bridged and unbridged mono-, di-, and tri-cycloalkadienyl/metal compounds are the most common metallocenes, and generally are of the formula:

(L)_{y}R¹_{z}(L')MX_{(x-y-1)} (I)

wherein M is a metal from groups IIIB to VIII or a rare earth metal of the Periodic Table; L and L' are the same or different and are π-bonded ligands coordinated to M, preferably cycloalkadienyl groups such as cyclopentadienyl, indenyl, or fluorenyl groups optionally substituted with one or more hydrocarbonyl groups containing 1 to 20 carbon atoms; R¹ is selected from the group consisting of C₁-C₄ substituted or unsubstituted alkylene radicals, dialkyl or diaryl germanium or silicon groups, and alkyl or aryl phosphine or amine radicals bridging L and L'; each X is independently hydrogen, an aryl, alkyl, alkenyl, alkylaryl, or arylalkyl radical having 1-20 carbon atoms, or a hydrocarboxy radical having 1-20 carbon atoms; y is 0, 1, or 2; x is 1, 2, 3, or 4 depending upon the valence state of M; z is 0 or 1 and is 0 when y is 0; and x-y ≥ 1.

Illustrative but non-limiting examples of metallocenes represented by formula I are dialkyl metallocenes such as bis(cyclopentadienyl)titanium dimethyl, bis(cyclopentadienyl)titanium diphenyl, bis(cyclopentadienyl)zirconium dimethyl, bis(cyclopentadienyl)zirconium diphenyl, bis(cyclopentadienyl)hafnium methyl and diphenyl, bis(cyclopentadienyl)titanium di-neopentyl, bis(cyclopentadienyl)zirconium di-neopentyl, bis(cyclopentadienyl)titanium dibenzyl, bis(cyclopentadienyl)zirconium dibenzyl, bis(cyclopentadienyl)vanadium dimethyl; the mono alkyl metallocenes such as bis(cyclopentadienyl)titanium methyl chloride, bis(cyclopentadienyl)titanium ethyl chloride, bis(cyclopentadienyl)titanium phenyl chloride, bis(cyclopentadienyl)zirconium methyl chloride, bis(cyclopentadienyl)zirconium ethyl chloride, bis(cyclopentadienyl)zirconium phenyl chloride, bis(cyclopentadienyl)titanium methyl bromide; the trialkyl metallocenes such as cyclopentadienyl titanium trimethyl, cyclopentadienyl zirconium triphenyl, and cyclopentadienyl zirconium trineopentyl, cyclopentadienyl zirconium trimethyl, cyclopentadienyl hafnium triphenyl, cyclopentadienyl hafnium trineopentyl, and cyclopentadienyl hafnium trimethyl; monocyclopentadienyl titanocenes such as pentamethylcyclopentadienyl titanium trichloride, pentaethylcyclopentadienyl titanium trichloride, bis(pentamethylcyclopentadienyl)titanium diphenyl; the carbene represented by the formula bis(cyclopentadienyl)titanium=CH2 and derivatives of this reagent; substituted bis(cyclopentadienyl)titanium (IV) compounds such as bis(indenyl)titanium diphenyl or dichloride, bis(methylcyclopentadienyl)titanium diphenyl or dihalides; dialkyl, trialkyl, tetraalkyl and pentaalkyl cyclopentadienyl titanium compounds such as bis(1,2-dimethylcyclopentadienyl)titanium diphenyl or dichloride, bis(1,2-diethylcyclopentadienyl)titanium diphenyl or dichloride; silicon, phosphine, amine or carbon bridged cyclopentadiene complexes such as dimethyl silyldicyclopentadienyl titanium diphenyl or dichloride, methyl phosphine dicyclopentadienyl titanium diphenyl or dichloride, methylenedicyclopentadienyl titanium diphenyl or dichloride and other dihalide complexes, and the like, as well as isopropyl(cyclopentadienyl)(fluorenyl)zirconium dichloride, isopropyl(cyclopentadienyl) (octahydrofluorenyl)zirconium dichloride, diphenylmethylene(cyclopentadienyl)(fluorenyl)zirconium dichloride, diisopropylmethylene (cyclopentadienyl)(fluorenyl)zirconium dichloride, diisobutylmethylene(cyclopentadienyl)(fluorenyl)zirconium dichloride, ditertbutylmethylene (cyclopentadienyl)(fluorenyl)zirconium dichloride, cyclohexylidene(cyclopentadienyl)(fluorenyl)zirconium dichloride, diisopropylmethylene (2,5-dimethylcyclopentadienyl)(fluorenyl)zirconium dichloride, isopropyl(cyclopentadienyl)(fluorenyl)-hafnium dichloride, diphenylmethylene (cyclopentadienyl)-(fluorenyl)hafnium dichloride, diisopropylmethylene-(cyclopentadienyl)(fluorenyl)hafnium dichloride, diisobutylmethylene(cyclopentadienyl)(fluorenyl)hafnium dichloride, ditertbutylmethylene(cyclopentadienyl)-(fluorenyl)hafnium dichloride, cyclohexylidene(cyclopentadienyl)(fluorenyl)hafnium dichloride, diisopropylmethylene(2,5-dimethylcyclopentadienyl)(fluorenyl)hafnium dichloride, isopropyl(cyclopentadienyl)(fluorenyl)titanium dichloride, diphenylmethylene(cyclopentadienyl)(fluorenyl)titanium dichloride, diisopropylmethylene(cyclopentadienyl)-(fluorenyl)titanium dichloride, diisobutylmethylene-(cyclopentadienyl)(fluorenyl)titanium dichloride, ditertbutylmethylene(cyclopentadienyl)(fluorenyl)titanium dichloride, cyclohexylidene(cyclopentadienyl)(fluorenyl)titanium dichloride, diisopropylmethylene(2,5 dimethylcyclopentadienyl)(fluorenyl)titanium dichloride, racemic-ethylene bis (1-indenyl) zirconium (IV) dichloride, racemic-ethylene bis (4,5,6,7-tetrahydro-1-indenyl) zirconium (IV) dichloride, racemic-dimethylsilyl bis (1-indenyl) zirconium (IV) dichloride, racemic-dimethylsilyl bis (4,5,6,7-tetrahydro-1-indenyl) zirconium (IV) dichloride, racemic-1,1,2,2-tetramethylsilanylene bis (1-indenyl) zirconium (IV) dichloride, racemic-1,1,2,2-tetramethylsilanylene bis (4,5,6,7-tetrahydro-1-indenyl) zirconium (IV), dichloride, ethylidene (1-indenyl tetramethylcyclopentadienyl) zirconium (IV) dichloride, racemic-dimethylsilyl bis (2-methyl-4-t-butyl-1-cyclopentadienyl) zirconium (IV) dichloride, racemic-ethylene bis (1-indenyl) hafnium (IV) dichloride, racemic-ethylene bis (4,5,6,7-tetrahydro-1-indenyl) hafnium (IV) dichloride, racemic-dimethylsilyl bis (1-indenyl) hafnium (IV) dichloride, racemic-dimethylsilyl bis (4,5,6,7-tetrahydro-1-indenyl) hafnium (IV) dichloride, racemic-1,1,2,2- tetramethylsilanylene bis (1-indenyl) hafnium (IV) dichloride, racemic-1,1,2,2-tetramethylsilanylene bis (4,5,6,7-tetrahydro-1- indenyl) hafnium (IV), dichloride, ethylidene (1-indenyl-2,3,4,5-tetramethyl-1-cyclopentadienyl) hafnium (IV) dichloride, racemic- ethylene bis (1-indenyl) titanium (IV) dichloride, racemic-ethylene bis (4,5,6,7-tetrahydro-1-indenyl) titanium (IV) dichloride, racemic- dimethylsilyl bis (1-indenyl) titanium (IV) dichloride, racemic- dimethylsilyl bis (4,5,6,7-tetrahydro-1-indenyl) titanium (IV) dichloride, racemic-1,1,2,2-tetramethylsilanylene bis (1-indenyl) titanium (IV) dichloride racemic-1,1,2,2-tetramethylsilanylene bis (4,5,6,7-tetrahydro-1-indenyl) titanium (IV) dichloride, and ethylidene (1-indenyl-2,3,4,5-tetramethyl-1-cyclopentadienyl) titanium IV) dichloride.

Another type of single site catalyst for use in the invention is a complex of a transition metal, a substituted or unsubstituted pi-bonded ligand, and one or more heteroallyl moieties, such as those described in U.S. Patent No. 5,527,752. Preferably, such complexes have one of the following formulas: 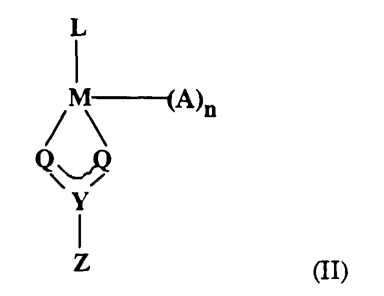 wherein:
M is a transition metal, preferably Zr or Hf;
L is a substituted or unsubstituted, pi-bonded ligand coordinated to M, preferably a cycloalkadienyl ligand;
each Q is independently selected from the group consisting of -O-, -NR-, -CR₂- and -S-, preferably oxygen;
Y is either C or S, preferably carbon;
Z is selected from the group consisting of -OR, -NR₂, -CR₃, -SR, -SiR₃, -PR₂, -H, and substituted or unsubstituted aryl groups, with the proviso that when Q is -NR- then Z is selected from the group consisting of -OR, -NR₂, -SR, -SiR₃, -PR₂ and -H, preferably Z is selected from the group consisting of -OR, -CR₃ and -NR₂;
n is 1 or 2;
A is a univalent anionic group when n is 2 or A is a divalent anionic group when n is 1, preferably A is a carbamate, carboxylate, or other heteroallyl moiety described by the Q, Y and Z combination; and
each R is independently a group containing carbon, silicon, nitrogen, oxygen, and/or phosphorus where one or more R groups may be attached to the L substituent, preferably R is a hydrocarbon group containing from 1 to 20 carbon atoms, most preferably an alkyl, cycloalkyl, or an aryl group and one or more may be attached to the L substituent;
or 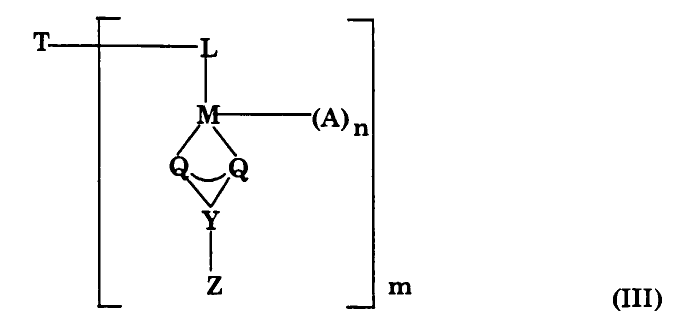 wherein:
M is a transition metal, preferably Zr or Hf;
L is a substituted or unsubstituted, pi-bonded ligand coordinated to M, preferably a cycloalkadienyl ligand;
each Q is independently selected from the group consisting of -O-, -NR-, -CR₂- and -S-, preferably oxygen;
Y is either C or S, preferably carbon;
Z is selected from the group consisting of -OR, -NR₂, -CR₃, -SR, -SiR₃, -PR₂, -H, and substituted or unsubstituted aryl groups, with the proviso that when Q is -NR- then Z is selected from the group consisting of -OR, -NR₂, -SR, -SiR_{3,} -PR₂, -H, and substituted or unsubstituted aryl groups, preferably Z is selected from the group consisting of -OR, -CR₃ and -NR₂;
n is 1 or 2;
A is a univalent anionic group when n is 2 or A is a divalent anionic group when n is 1, preferably A is a carbamate, carboxylate, or other heteroallyl moiety described by the Q, Y and Z combination;
each R is independently a group containing carbon, silicon, nitrogen, oxygen, and/or phosphorus where one or more R groups may be attached to the L substituent, preferably R is a hydrocarbon group containing from 1 to 20 carbon atoms, most preferably an alkyl, cycloalkyl, or an aryl group and one or more may be attached to the L substituent;
T is a bridging group selected from the group consisting of alkylene and arylene groups containing from 1 to 10 carbon atoms optionally substituted with carbon or heteroatoms, germanium, silicone and alkyl phosphine; and
m is 2 to 7, preferably 2 to 6, most preferably 2 or 3.

In formulas II and III, the supportive substituent formed by Q, Y and Z is a unicharged polydentate ligand exerting electronic effects due to its high polarizability, similar to the cyclopentadienyl group. In the most preferred embodiments of this invention, the disubstituted carbamates, 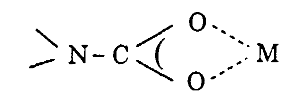 and the carboxylates 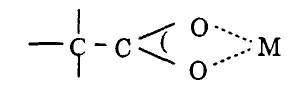 are employed.

Examples of complexes according to formulas II and III include indenyl zirconium tris(diethylcarbamate), indenyl zirconium tris(trimethylacetate), indenyl zirconium tris(p-toluate), indenyl zirconium tris(benzoate), (1-methylindenyl)zirconium tris(trimethylacetate), (2-methylindenyl) zirconium tris(diethylcarbamate), (methylcyclopentadienyl) zirconium tris(trimethylacetate), cyclopentadienyl tris(trimethylacetate), tetrahydroindenyl zirconium tris(trimethylacetate), and (pentamethylcyclopentadienyl) zirconium tris(benzoate). Preferred examples are indenyl zirconium tris(diethylcarbamate), indenyl zirconium tris(trimethylacetate), and (methylcyclopentadienyl) zirconium tris(trimethylacetate).

One method of manufacturing a preferred catalyst precursor, indenyl zirconium tris(diethylcarbamate), is to first react a source of cycloalkadienyl ligand with a metal compound of the formula M(NR₂)₄, in which M and R are defined above, to introduce the cycloalkadienyl ligand onto the metal compound. The resulting product is then dissolved in an inert solvent, such as toluene, and the heterocumulene CO₂ is contacted with the dissolved product to insert into one or more M-NR₂ bonds to form a carbamate.

Another type of single site catalyst that can be used in accordance with the invention is a constrained geometry catalyst of the formula: 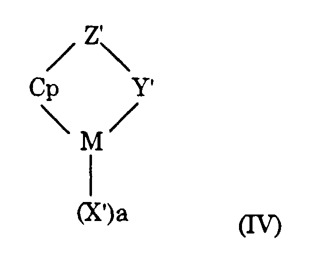 wherein:
M is a metal of groups IIIB to VIII of the Periodic Table;
Cp is a cyclopentadienyl or substituted cyclopentadienyl group bound in an η⁵ mode to M;
Z' is a moiety comprising boron, or a member of group IVB of the Periodic Table and optionally sulfur or oxygen, the moiety having up to 20 non-hydrogen atoms, and optionally Cp and Z' together form a fused ring system;
X' is an anionic ligand group or a neutral Lewis base ligand group having up to 30 non-hydrogen atoms;
a is 0, 1, 2, 3 or 4 depending on the valence of M; and
Y' is an anionic or non-anionic ligand group bonded to Z' and M and is nitrogen, phosphorus, oxygen or sulfur having up to 20 non-hydrogen atoms, and optionally Y' and Z' together form a fused ring system.

Constrained geometry catalysts are well known to those skilled in the art and are disclosed in, for example, U.S. Patent Nos. 5,026,798 and 5,055,438 and published European Application No. 0 416 815 A2.

Illustrative but non-limiting examples of substituents Z', Cp, Y', X' and M in formula IV are:

| Z' | Cp | Y' | X' | M |
|---|---|---|---|---|
| dimethylsilyl | cyclopentadienyl | t-butylamido | chloride | titanium |
| | | | | |
| methylphenylsilyl | fluorenyl | phenylamido | methyl | zirconium |
| | | | | |
| diphenylsilyl | indenyl | cyclohexylamido | | hafnium |
| | | | | |
| tetramethylethylene | | oxo | | |
| | | | | |
| ethylene | tetramethylcyclopentadienyl | | | |
| | | | | |
| diphenylmethylene | | | | |

The most preferred constrained geometry catalyst is a silyl amide catalyst (ACT): (C₅Me₄)Me₂Si(N-t-Bu)TiCl₂, wherein Me is methyl and Bu is butyl.

The invention is also useful with another class of single site catalysts, di(imine) metal complexes, as described in PCT Application No. WO 96/23010. Such di(imine) metal complexes are transition metal complexes of bidentate ligands selected from the group consisting of: 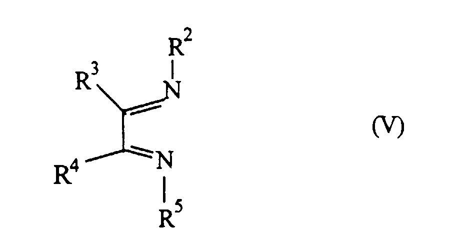 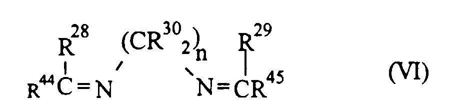 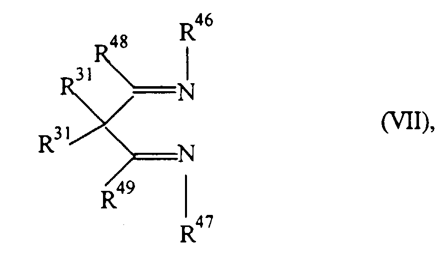 and 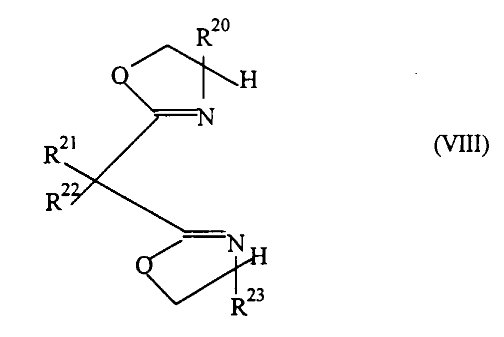 wherein said transition metal is selected from the group consisting of Ti, Zr, Sc, V, Cr, a rare earth metal, Fe, Co, Ni, and Pd;
R² and R⁵ are each independently hydrocarbyl or substituted hydrocarbyl, provided that the carbon atom bound to the imino nitrogen atom has at least two carbon atoms bound to it;
R³ and R⁴ are each independently hydrogen, hydrocarbyl, substituted hydrocarbyl, or R³ and R⁴ taken together are hydrocarbylene or substituted hydrocarbylene to form a carbocyclic ring;
R⁴⁴ is hydrocarbyl or substituted hydrocarbyl, and R²⁸ is hydrogen, hydrocarbyl, or substituted hydrocarbyl or R⁴⁴ and R²⁸ taken together form a ring;
R⁴⁵ is hydrocarbyl or substituted hydrocarbyl, and R²⁹ is hydrogen, substituted hydrocarbyl, or hydrocarbyl, or R⁴⁵ and R²⁹ taken together form a ring;
each R³⁰ is independently hydrogen, substituted hydrocarbyl, or hydrocarbyl, or two of R³⁰ taken together form a ring;
each R³¹ is independently hydrogen, hydrocarbyl, or substituted hydrocarbyl;
R⁴⁶ and R⁴⁷ are each independently hydrocarbyl or substituted hydrocarbyl, provided that the carbon atom bound to the imino nitrogen atom has at least two carbon atoms bound to it;
R⁴⁸ and R⁴⁹ are each independently hydrogen, hydrocarbyl, or substituted hydrocarbyl;
R²⁰ and R²³ are independently hydrocarbyl or substituted hydrocarbyl;
R²¹ and R²² are independently hydrogen, hydrocarbyl, or substituted hydrocarbyl; and
n is 2 or 3;
and provided that:
said transition metal also has bonded to it a ligand that may be displaced by or added to the olefin monomer being polymerized; and
when the transition metal is Pd, said bidentate ligand is (V), (VII) or (VIII).

The catalyst can be soluble or insoluble, supported or unsupported, spray dried in either the presence or absence of a filler, a prepolymer, or a preformed catalyst. Techniques for preparing prepolymer or preformed catalysts are known to those skilled in the art.

The co-catalyst employed with the above-enumerated precursors is an aluminoxane such as methylaluminoxane (MAO) or modified methylaluminoxane (MMAO).

The catalyst and/or co-catlyst can be continuously or intermittently injected into the reactor by various known techniques. A gas or a liquid which is inert to the catalyst and the polymerization is preferably used to carry the catalyst into the bed.

All references cited herein are incorporated by reference.

The invention is illustrated by the examples which follow. All percentages in the specification, including the examples, are by weight unless otherwise specified.

### Examples

### Example 1: Polymerization with ACT catalyst using hexane alone as the polymerization medium.

In a glove box under nitrogen, an oven dried small vial was charged with 0.0184g ACT catalyst. The vial was sealed and removed from the glove box. Toluene (10ml, Aldrich, anhydrous, packaged under nitrogen) was added to the flask to form a solution with a concentration of 0.005M.

A 1L stainless steel Fluitron® reactor was baked for one hour at 100°C with nitrogen constantly flowing through it. It was cooled to 40°C and charged with 500ml hexane, 1ml tri-isobutyl aluminum (TIBA) (0.87M in heptane), and 2ml ENB (purified). The reactor was sealed and brought to 65°C. Ethylene (C₂) and propylene (C₃) gases (C₃/C₂ fill ratio=0.75 to 1) were charged to the reactor until the reactor pressure reached 90psi. The ratio of the gases was then adjusted to C₃/C₂=0.20. Polymerization was initiated by injecting under pressure 5µmol Ti or 1.0 ml of 0.005M ACT in toluene solution and 2.77ml of 1.8M MAO (Al/Ti=1000). The polymerization was carried out for 1 hour after ACT and MAO were injected. ENB (0.5ml) was injected to the reactor under pressure at polymerization times of 10 minutes and 30 minutes, respectively, until a total of 3ml ENB was added to the reactor.

Polymerization was terminated by injecting 2ml of ethanol killing solution (0.5g BHT, i.e., 2,6-di-t-butylated-4-methylphenol; 1.0g Kemamine® (#AS-900, a product of Witco Corp.; 0.5g Irganox® (#1076, a product of Ciba-Geigy) in 125ml ethanol). The C₂ and C₃ gases were discontinued and the reactor was vented and cooled to room temperature.

The polymer was removed, blended in methanol, and dried in a vacuum oven at 40°C overnight. The polymer collected weighed 34.4g, for catalyst activity of 6.88kg(EPDM)/mmol Ti/hr. The polymer FI was 1.7. The Mw was 2.04(x 10⁵) and Mn was 0.96(x 10⁵) based on SEC measurement. This gave a PDI (Mw/Mn) of 2.1.

### Example 2: Polymerization with ACT in a hexane/toluene=5:1 medium.

In a glove box under nitrogen, an oven dried 10ml volumetric flask was charged with 0.0184g ACT catalyst. The vial was sealed and removed from the glove box. Toluene (10 ml, Aldrich, anhydrous, packaged under nitrogen) was added to the flask to form a solution with a concentration of 0.005M.

A 1L stainless steel Fluitron® reactor was baked for one hour at 100°C with nitrogen constantly flowing through it. It was cooled to 40°C and charged with 500ml hexane, 100ml of toluene (Aldrich, anhydrous, packaged under nitrogen), lml TIBA (0.87M in heptane), and 2ml ENB (purified). The reactor was sealed and brought to 65°C. Ethylene (C₂) and propylene (C₃) gases (C₃/C₂ fill ratio=0.75 to 1) were charged to the reactor until the reactor pressure reached 90psi. The ratio of the gases was adjusted to C₃/C₂=0.20.

The polymerization was initiated by injecting under pressure 2.77ml of 1.8M MAO (Al/Ti=1000) and 5µmol Ti or 1.0ml of 0.005M ACT in toluene solution. The polymerization was carried out for 1 hour after MAO and ACT were injected. ENB (0.5ml) was injected to the reactor under pressure at a polymerization time of 10 minutes and 30 minutes, respectively. A total of 3ml ENB was added to the reactor. Polymerization was terminated by injecting 2ml of ethanol killing solution (0.5g BHT, 1.0 g Kemamine®, 0.5g Irganox® in 125ml ethanol). The C₂ and C₃ gases were shut down and the reactor was vented and cooled to room vacuum temperature.

The polymer was removed, blended in methanol, and dried in a vacuum oven at 40°C overnight. The polymer collected weighed 41.3g, for catalyst activity of 8.26kg(EPDM)/mmol Ti/hr. The polymer FI was 3.6. The Mw was 1.97 (x 10⁵) and Mn was 0.93(x 10⁵) based on SEC measurement. This gave a PDI (Mw/Mn) of 2.1.

### Example 3: Polymerization with ACT catalyst in a hexane/toluene=1:1 medium.

Example 2 was repeated except that 250ml of hexane and 250ml of toluene were added to the reactor as the polymerization medium instead of 500ml hexane and 100ml of toluene. This gave ratio of hexane/toluene =1. After polymerization, the EPDM polymer collected weighed 51.3g, for catalyst activity of 10.26kg(EPDM)/mmol Ti/hr. The polymer FI was 2.04. The Mw was 2.06(x 10⁵) and Mn was 0.73(x 10⁵) measured by SEC. This gave a PDI (Mw/Mn) of 2.8.

### Example 4: Polymerization with ACT catalyst in a hexane/toluene=1:5 medium.

Example 2 was repeated except that 100ml of hexane and 500ml of toluene were added as the reaction medium instead of 500ml hexane and 100ml of toluene. This gave a ratio of hexane/toluene=1:5. After polymerization, the EPDM polymer collected weighed 38.6g, for catalyst activity of 7.72kg (EPDM)/mmol Ti/hr. The polymer FI was 4.7. The Mw was 1.89 (x 10⁵) and Mn was 0.74 (x 10⁵) measured by SEC. This gave a PDI (Mw/Mn) of 2.5.

### Example 5: Polymerization with ACT catalyst using toluene alone as the polymerization medium.

Again Example 2 was repeated, except that 500ml of toluene were added as reaction medium instead of 500ml hexane and 100ml of toluene. After polymerization, EPDM polymer collected weighed 9.1g, for catalyst activity of 1.82kg(EPDM)/mmol Ti/hr. The polymer FI was 26.2. The MW was 0.94(E+05) and Mn was 0.54(E.05) measured by SEC. This gave a PDI (Mw/Mn) of 1.7.

### Example 6: Polymerization with ACT catalyst using m-xylene alone as the polymerization medium.

Example 1 was repeated except that m-xylene was used to dissolve ACT catalyst and 500ml m-xylene was charged to the reactor as polymerization medium instead of 500ml hexane. After polymerization, EPDM polymer collected weighed 34.4 g, for catalyst activity of 6.88kg(EPDM)/mmolTi/hr. The polymer FI was 0.54 and calculated Mooney was 98.

### Example 7: Polymerization with ACT catalyst using cyclohexane alone as the polymerization medium.

Example 1 was repeated except that cyclohexane was used to dissolve ACT catalyst and 500ml cyclohexane was charged to the reactor as polymerization medium instead of 500ml hexane. After polymerization, EPDM polymer collected weighed 38.8 g, for catalyst activity of 7.77kg(EPDM)/mmolTi/hr. The polymer FI was 2.5 and the calculated Mooney was 58.

### Example 8: Polymerization with ACT catalyst in a hexane/m-xylene=1:1 medium.

Example 1 was repeated except that hexane/m-xylene solvent mixture was used to dissolve ACT catalyst and 250ml hexane and 250ml m-xylene was charged to the reactor as the polymerization medium. After polymerization, EPDM polymer collected weighed 39.4g, for catalyst activity of 7.88kg(EPDM)/mmol Ti/hr. The polymer FI was 0.71 and the calculated Mooney was 89.

### Example 9: Polymerization with ACT catalyst in a hexane/o-xylene=1:1 medium.

Example 8 was repeated except that hexane/o-xylene solvent mixture was used to dissolve ACT catalyst and 250ml hexane and 250ml o-xylene was charged to the reactor as the polymerization medium. After polymerization, EPDM polymer collected weighed 45.9g, for catalyst activity of 9.18kg(EPDM)/mmol Ti/hr. The polymer FI was 1.4 and the calculated Mooney was 71.

The polymerization conditions and polymer properties of Examples 1 through 9 are summarized in Table 1.

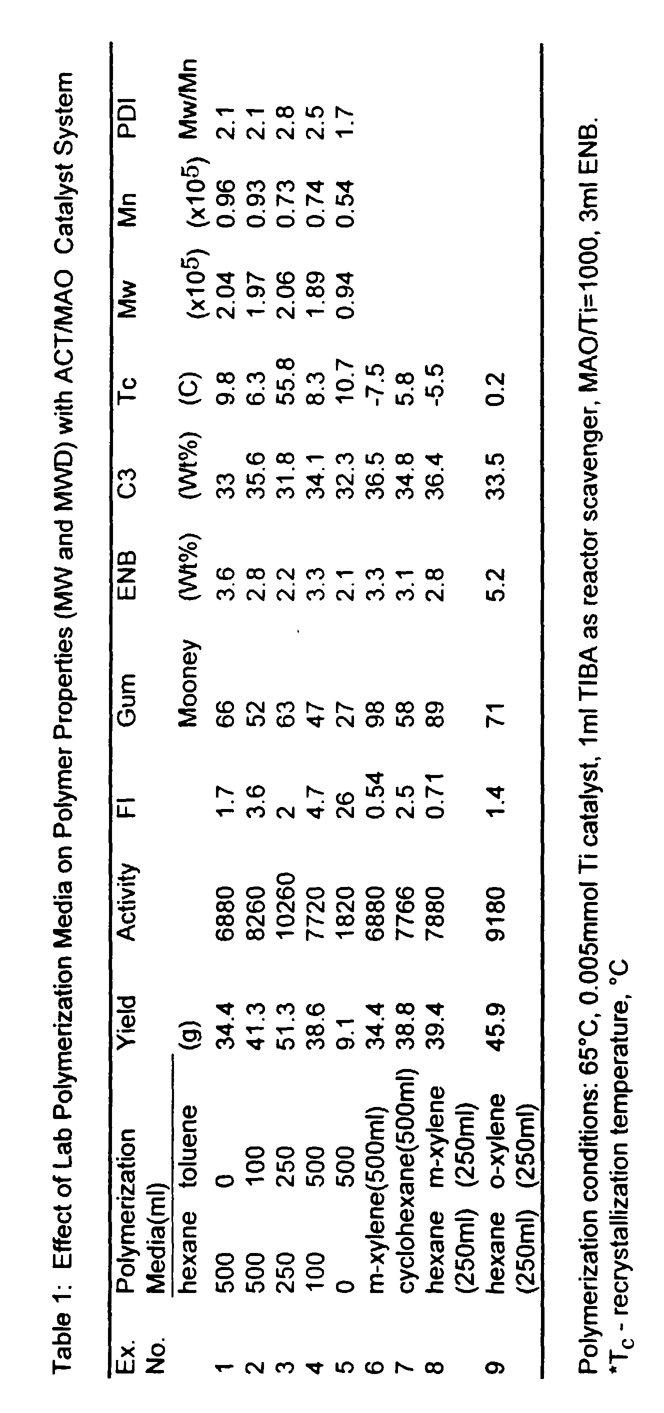

### Example 10: EPDM polymerization with Cp*Ti(BzO)₃/MeOH/DTBP/MMAO catalyst system and using hexane to dissolve catalyst precursor.

In a glove box under nitrogen, 0.027g Cp*Ti(BzO)₃ was weighed in a vial, equipped with a magnetic stirring bar. The vial was sealed and brought out of the glove box, where 5ml hexane (nitrogen sparged) was added via a syringe to make a 0.01(M) Cp*Ti(BzO)₃ precursor solution. Then 1.6ml (4eq. of MeOH with respect to Ti) of 0.123(M) MeOH/hexane solution was added to that, and the whole solution was stirred for half an hour at room temperature.

A 100ml glass bottle, containing a stirring bar, sealed with a rubber septum, was purged with nitrogen for a while. Hexane (60ml) was added to the bottle. To the same bottle 0.8ml 1.74(M) MMAO, 1ml 0.5(M) 2,6-di-t-butylphenol (DTBP), 0.65ml of catalyst precursor premixed with MeOH solution and 2ml ENB were mixed together by stirring. The active catalyst in the bottle had a DTBP/Ti = 100, MeOH/Ti = 4, MMAO/Ti = 200. ENB was used as termonomer in the EPDM polymerization.

A 1L stainless-steel reactor (Fluitron®) was baked by purging nitrogen through it for at least an hour and cooled to 40°C. To the reactor 500ml hexane was charged. The catalyst solution made in the bottle was transferred into the reactor by nitrogen pressure. The reactor was sealed and its temperature was increased to 60°C. The reactor was filled with ethylene (C₂) and propylene (C₃) at a ratio of 1:1. When reactor pressure reached 90psi, C₃ and C₂ were adjusted to 1:3. The polymerization was run for an hour. During polymerization 0.5ml ENB was injected into the reactor under pressure at 10 minute and 20 minute intervals. So, a total 3ml ENB was used for the polymerization.

After the completion of polymerization, 2ml of inhibitor solution (0.5g BHT, 1.0g Kemamine®, 0.5g Irganox®' in 125ml of EtOH) was injected to the reactor. The C₂ and C₃ gases were discontinued and the reactor was vented and cooled to room temperature. The polymer was removed from of the reactor , blended with methanol, and dried in the vacuum oven at 40°C overnight. The recovered polymer weighed 29g, for catalyst activity of 6.0kg(EPDM)/mmol/Ti/h. The polymer had a flow index of 0.44 and calculated Mooney was 105.

### Example 11: EPDM polymerization with Cp*Ti(BzO)₃/MeOH/DTBP/MMAO catalyst system and using toluene to dissolve catalyst precursor.

Similar experiment to Example 10 was carried out except that toluene was used instead of hexane to dissolve Cp*Ti(BzO)₃ precursor and mixed with MeOH in a toluene solution. After polymerization, EPDM polymer collected weighed 22.3g, for catalyst activity of 4.46kg(EPDM)/mmol Ti/hr. The polymer has a FI of 1.1 and the calculated mooney was 77.

In can be clearly seen from Examples 10 and 11 that the use of hexane increased the molecular weight of the EPDM rubber when the conditions were kept the same.

### Examples 12 through 15: EPDM production in a gas phase polymerization in stirred bed reactor.

The reactor employed was a two-phase (gas/solid) stirred bed, back mixed reactor. A set of four plows mounted horizontally on a central shaft rotated at 200 rpm to keep the particles in the reactor mechanically fluidized. The cylinder swept by these plows measured 40.6 cm (16 in.) long by 39.7 cm (15.6 in.) in diameter, resulting in a mechanically fluidizable volume of 45 liters (1.65 ft³). The gas volume was larger than the mechanically fluidizable volume due to the vertical cylindrical chamber plus other ancillary equipment in the reaction system and totaled 62.6 liters (2.21 ft³).

Reactor pressure was 350 psig. Ethylene, propylene and diene monomers were fed to the reactor continuously via control valves. Partial pressures for ethylene ranged from 240 to 320 psia and for propylene from 35 to 90 psia. Gas composition was measured by a gas chromatograph analyzer. Nitrogen made up the balance of the composition of the gas, entering with the catalyst and leaving via a small vent of the reactor gases. The vent opening was adjusted via computer to maintain constant total pressure in the reactor. The diene (ENB) feed varied from 30 to 50 cc/lb of polymer produced.

The reactor was cooled by an external jacket of glycol. The bed temperature was measured with an RTD temperature probe in a thermowell protruding into the bed between the inner set of plows. Reactor temperature was controlled to values in the range of 20° to 80°C for EPDM production.

A solution catalyst was added continuously for most of the batch, along with ethylene, propylene, diene monomers. The solution catalyst was carried through a solution catalyst feeder by nitrogen. Alkyl cocatalysts were also added continuously, at fixed molar ratios to the catalyst feed rate. As in a fluidized bed reactor, the cocatalyst feed rate was set so the catalyst activity was not compromised. Batch yields of granular polymer were 4 to 10 lbs. Runs lasted about 2 to 10 hours. A fluidization aid (carbon black N-650) was used at 10 to 20 wt% level for preventing stickiness.

A run commenced with charging the reactor with the required amount of carbon black and passivationg it with the alkyl (cocatalyst) used in the run. The monomer was charged to the reactor and feeds (nitrogen and monomers) adjusted until the desired gas composition was reached. After catalyst feed started, monomers were added to the reactor sufficient to maintain gas concentrations. As the catalyst inventory built up, polymer production rate increased to 3 to 10 lbs/hr, at which point catalyst feed was reduced to maintain a constant polymer production rate. Alkyl rate was maintained in proportion to the catalyst feed rate. After the desired batch weight was made, the monomers were purged, the catalyst was deactivated with isopropanol and the polymer was stabilized with appropriate amounts of a stabilizer package comprising BHT/ZnO. Residual diene was purged with nitrogen for several hours until only a low level of diene was left in the polymer. The batch was discharged into a bag, open to atmosphere.

### Example No. 12:

Dry carbon black (2.1 lb) was charged into a stirred bed reactor and passivated with MMAO at 0.19mM/g. Ethylene, propylene, and hydrogen were charged in such a way that C₂ pressure was 240 psia, the ethylene/propylene ratio was 0.2, and hydrogen was 0.1 mole%. The reactor was maintained at 60°C. The ACT catalyst in toluene with a concentration of 1 mM/l was contacted with 10% MMAO in isopentane in-line for about 10 min and then passed into the reactor. When the polymerization rate was steady, ethylene, propylene, and ENB levels were maintained by continuous flow of these components. The cocatalyst and catalyst were fed at Al/Ti ratio of 460:1. After 10 hours, the reaction was terminated by adding isopropanol. Stabilization additives were added. Unreacted monomers were purged with nitrogen and the batch was discharged. The batch weight was 6 lbs.

The polymer composition was found to be 36% propylene, 5.4% ENB, and 58.6% ethylene. The Ti residue in the polymer was 10.6 ppm. The molecular weight of the polymer by SEC was found to be: Mw=152,000; Mn=39,000. The gum Mooney of the product was 50ML.

### Example No. 13:

Dry carbon black (2.1 lb) was charged into the stirred bed reactor and passivated with MMAO at 0.19 mM/g. Ethylene, propylene, and hydrogen were charged in such a way that C₂ pressure was 240 psia, the ethylene/propylene ratio was 0.2, and hydrogen was 0.1 mole%. The reactor was maintained at 60°C. The ACT catalyst in hexane with a concentration of 1mM/l was contacted with 10%MMAO in isopentane in-line for about 10 minutes and then passed into the reactor. When the polymerization rate was steady, ethylene, propylene, and ENB levels were maintained by continuous flow of these components. The cocatalyst and catalyst were fed at Al/Ti ratio of 430:1. After about 9.5 hours, the reaction was terminated by adding isopropanol. Additives were added for stabilization. Unreacted monomers were purged with nitrogen and the batch was discharged. The batch weight was 11.3 lbs.

The polymer composition was found to be 36% propylene, 6.9% ENB, and 57.1% ethylene. The Ti residue in the polymer was 6.0 ppm. The molecular weight of the polymer by SEC was found to be: Mw=212,000; Mn=56,000. The gum Mooney of the product was 67ML.

It can be clearly be seen from Examples 12 and 13 that the use of hexane increased the molecular weight of the EPDM rubber when the conditions were kept nearly the same.

### Example No. 14:

Dry carbon black (2 lb) was charged into the stirred bed reactor and passivated with MMAO at 0.19mM/g. Ethylene and propylene were charged in such a way that C₂ pressure was 320 psia and the ethylene/propylene ratio was 0.2. The reactor was maintained at 60°C. The ACT catalyst in toluene with a concentration of 7 mM/l was contacted with 10% MMAO in isopentane in-line for about 10 minutes and then passed into the reactor. When the polymerization rate was steady, ethylene, propylene and ENB levels were maintained by continuous flow of these components. The cocatalyst and catalyst were fed at Al/Ti ratio of 850. After 8.5 hours, the reaction was terminated by adding isopropanol. Stabilization additives were added. Unreacted monomers were purged with nitrogen and the batch was discharged. The batch weight was 13 lbs.

The polymer composition was found to be 37.2% propylene, 3.7% ENB, and 59.1% ethylene. The Ti residue in the polymer was 4 ppm. The molecular weight of the polymer by SEC was found to be: Mw=159,000; Mn=38,000. The gum Mooney of the product was 70ML.

### Example No. 15:

Dry carbon black (2 lb) was charged into the stirred bed reactor and passivated with MMAO at 0.19mM/g. Ethylene and propylene were charged in such a way that C₂ pressure was 320 psia and ethylene/propylene ratio was 0.2. The reactor was maintained at 60°C. The ACT catalyst in hexane with a concentration of 1 mM/l was contacted with 10% MMAO in isopentane in-line for about 10 minutes and then passed into the reactor. When the polymerization rate was steady, ethylene, propylene and ENB levels were maintained by continuous flow of these components. The cocatalyst and catalyst were fed at Al/Ti ratio of 820. After about 6.5 hours, the reaction was terminated by adding isopropanol. Additives were added for stabilization. Unreacted monomers were purged with nitrogen and then the batch was discharged. The batch weight was 10.3 lbs.

The polymer composition was found to be 35% propylene, 7.8% ENB, and 57.2% ethylene. The Ti residue in the polymer was 3.8 ppm. The molecular weight of the polymer by SEC was found to be: Mw=257,000; Mn=67,000. The gum Mooney of the product was 112 ML.

It can be clearly seen from Examples 14 and 15 that the use of hexane increased the molecular weight of the EPDM rubber when the conditions were kept nearly the same.

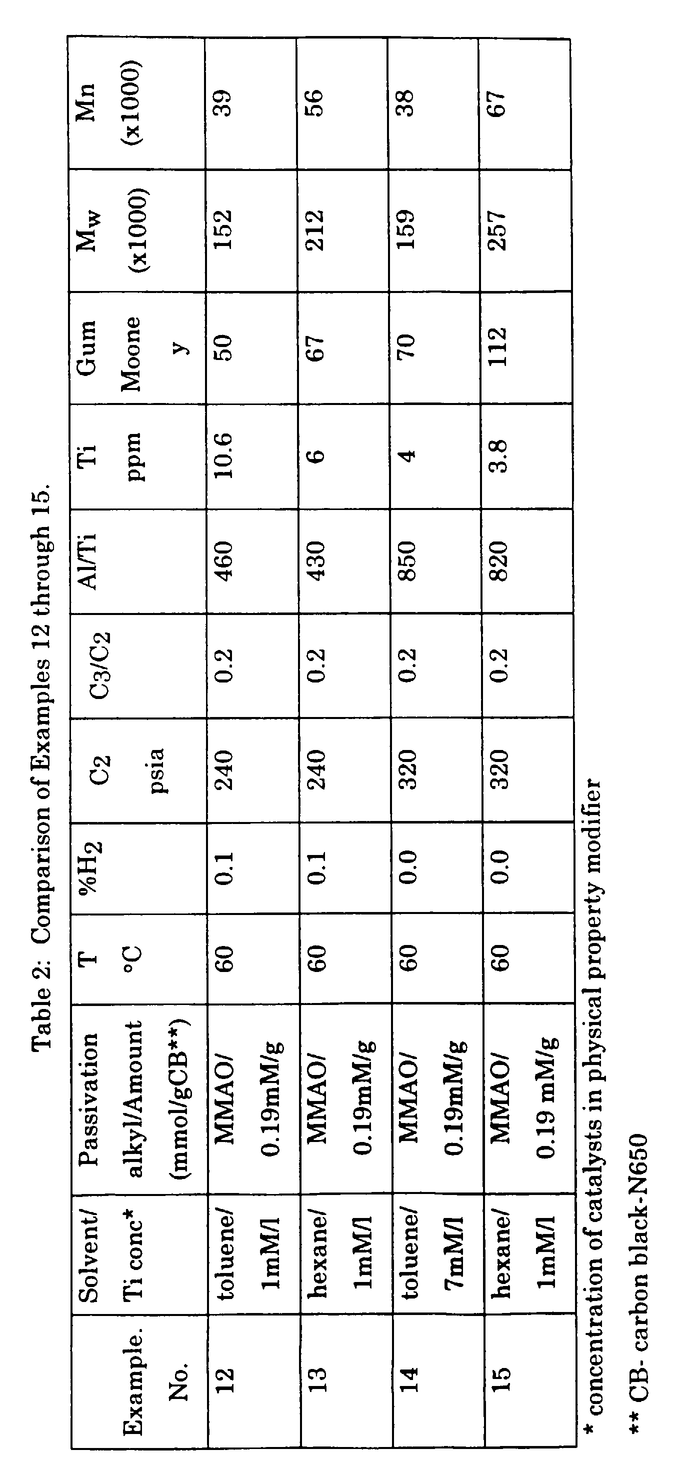

## Claims

1. A polymerization process employing a single site catalyst wherein the molecular weight, molecular weight distribution, or both of the polymer produced is controlled by introducing a physical property modifier selected from the group consisting of an aliphatic hydrocarbon, an alicyclic hydrocarbon, an aromatic hydrocarbon, and mixtures thereof.

2. A process according to Claim 1 wherein said aliphatic hydrocarbon has a solubility parameter of not more than 31.4 (J/cm³)^{1/2} (7.5 (cal/cm³)^{1/2}), said alicyclic hydrocarbon has a solubility parameter of not less than 32.2 (J/cm³)^{1/2} (7.7 (cal/cm³)^{1/2}), and said aromatic hydrocarbon has a solubility parameter of not less than 32.2 (J/cm³)^{1/2} (7.7 (cal/cm³)^{1/2}).

3. A process according to any one of Claims 1 or 2 wherein said aliphatic hydrocarbon and said alicyclic hydrocarbon each have 4 to 12 carbon atoms and said aromatic hydrocarbon has 6 to 20 carbon atoms.

4. A process according to any one of the preceding claims wherein said physical property modifier is selected from the group consisting of butane, pentane, isopentane, hexane, heptane, decane, cyclopentane, cyclehexane, benzene, azobenzene, toluene, xylene, and mixtures thereof.

5. A process according to any one of the preceding claims wherein said physical property modifier is a combination of (i) an aliphatic hydrocarbon or alicyclic hydrocarbon and (ii) an aromatic hydrocarbon in a mixing ratio of 90:10 to 10:90.

6. A process according to any one of the preceding claims wherein said physical property modifier is a combination of an aliphatic hydrocarbon and an aromatic hydrocarbon selected from the combinations of hexane-toluene, isopentane-toluene, heptane-toluene, hexane-xylene, isopentane-xylene, and heptane-xylene.

7. A process according to any one of the preceding claims wherein said polymerization process employed is a gas fluidized bed process.

8. A process according to any one of the preceding claims wherein said polymerization process produces a polymer selected from the group consisting of (a) a homopolymer of ethylene or propylene, (b) a copolymer of ethylene and at least one alpha olefin having 3 to 20 carbon atoms, (c) a copolymer of propylene and at least one alpha olefin having 4 to 20 carbon atoms, (d) a terpolymer of ethylene, propylene, and a diene, (e) a polymer of an aromatic compound having vinyl unsaturation, and (f) polar vinyl monomers selected from the group consisting of styrene, substituted styrene, acrylonitrile, maleic acid esters, vinyl acetate, acrylate esters, methacrylate esters, vinyl trialkyl silanes, and mixtures thereof.

9. A process according to any one of the preceding claims wherein said polymerization is conducted in the presence of an inert particulate material in an amount ranging from 0.3 to 80% by weight.

10. A process according to claim 9, wherein said inert particulate material is selected from the group consisting of carbon black, activated carbon, silica, clay, talc, and mixtures thereof.

11. A process according to any one of the preceding claims wherein said single site catalyst is (C₅Me₄)Me₂Si(N-t-Bu)TiCl₂.

12. A process according to any one of the preceding claims wherein said polymerization process is conducted using a liquid single site catalyst in which a catalyst precursor compound has been dispersed or dissolved in at least one physical property modifier.

13. A process according to any one of the preceding claims wherein at least one physical property modifier is fed to the polymerization.

14. A process according to any one of the preceding claims wherein said polymerization process is conducted using a supported single site catalyst prepared by:
a. dissolving a catalyst precursor compound in at least one physical property modifier to form a solution;
b. adding a support material to the solution to form a slurry; and
c. drying the slurry to form a catalyst.
